# EUROPEAN PATENT SPECIFICATION

(11) **EP 0 753 792 B1**
(45) Date of publication and mention of the grant of the patent: **12.12.2001**
(21) Application number: 96305014.1
(22) Date of filing: 05.07.1996
(51) Int. Cl.: G03B 27/62

(54) **Film transfer system**
Filmtransfersystem
Système de transfert de film

(30) Priority: 11.07.1995 JP 17494595; 26.04.1996 JP 10788096
(43) Date of publication of application: 15.01.1997
(73) Proprietor: Noritsu Koki Co., Ltd., Wakayama-shi, Wakayama-ken 640-8550 (JP)
(72) Inventor: Miyamori, Takahisa, Wakayama-shi, Wakayama-ken (JP); Yamaji, Yoshiyuki, Wakayama-shi, Wakayama-ken (JP); Miyawaki, Hiroshi, Wakayama-shi, Wakayama-ken (JP)
(74) Representative: Hillier, Peter

(56) References cited:
- EP-A- 0 582 852
- US-A- 3 586 430

## Description

The present invention relates to an improvement of a film transfer apparatus for subjecting a film to a desired process at an exposure station.

Film transfer apparatuses are known in which a film drawn out from a cartridge is temporarily rewound on a take-up member so that it can be subjected repeatedly to printing processes with minimum risks of damage or injury.

Each conventional film transfer apparatus has two drive motors for driving a spool rotating shaft of the cartridge and the take-up member respectively, thus increasing the arrangement difficulty and the dimensions. It often happens that a film is jammed and damaged during its unwinding and rewinding operations.

If the trailing end of a film is not securely glued and detached from a spool of the cartridge, it may hardly be returned to the cartridge without bending or jamming.

It is an object of the present invention, in view of the foregoing predicament, to provide an improved film transfer apparatus in which a film can be unwound and rewound with one single drive motor so that the entire construction is simplified and the power consumption in a drive train is saved, can hardly be jammed or injured during its unwinding and rewinding operations, can be removed from a film transfer path when it is separated from a spool of a cartridge, and can be prevented from injury while it is being secured to the spool.

A film transfer apparatus is disclosed in US-A-3586430 having a cartridge set station provided at one end of a film transfer path and a film process station provided at an intermediate location of the film transfer path for drawing a film from a cartridge loaded to the cartridge set station, advancing it by the action of a film transfer means to the film process station where it is scanned or exposed for printing, and returning it to the cartridge.

The film transfer apparatus according to the present invention as defined in claim 1 is characterised by a detecting means for detecting removal of the trailing end of the film from the spool in the cartridge, a film drawing means responsive to a detection signal of the detecting means for drawing out from the cartridge the film which has been removed from its spool, and a film discharging means for unloading from the film transfer path the film which has been drawn from the cartridge and in that the film transfer means has a film transfer mechanism linked to a drive motor, the detecting means comprises a rotary detection disk and a rotation sensor, the rotary detection disk arranged to stop its rotating motion when the trailing end of the film of which final frame has been subjected to a desired process is not separated from the spool or to keep rotating due to a driving force of the film transfer mechanism when the trailing end is separated from the spool, and the rotation sensor arranged to detect the continuous rotation of the rotary detection disk after the final frame has been subjected to the process.

The film transfer apparatus may further comprise an idling means for canceling the driving force of the film transfer mechanism to prevent exertion of an excessive load on to the film when the trailing end of the film is not separated from the spool.

Exemplary embodiments of the invention will now be described with reference to the accompanying drawings of which:-
Fig. 1 is a plan view of a film transfer apparatus showing one embodiment of the present invention;
Fig. 2 is a side view of a clutch section of the apparatus;
Fig. 3 is a side view of the apparatus;
Fig. 4 is a flowchart of film advancing;
Fig. 5 is a flowchart of film rewinding;
Fig. 6 is a plan view of a film transfer apparatus showing another embodiment of the present invention;
Fig. 7 is a side view of the apparatus;
Fig. 8 is a side view of a clutch section of the apparatus;
Fig. 9 is a side view of the apparatus; and
Fig. 10 is a flowchart of film transfer operation of the apparatus.

### Embodiment 1

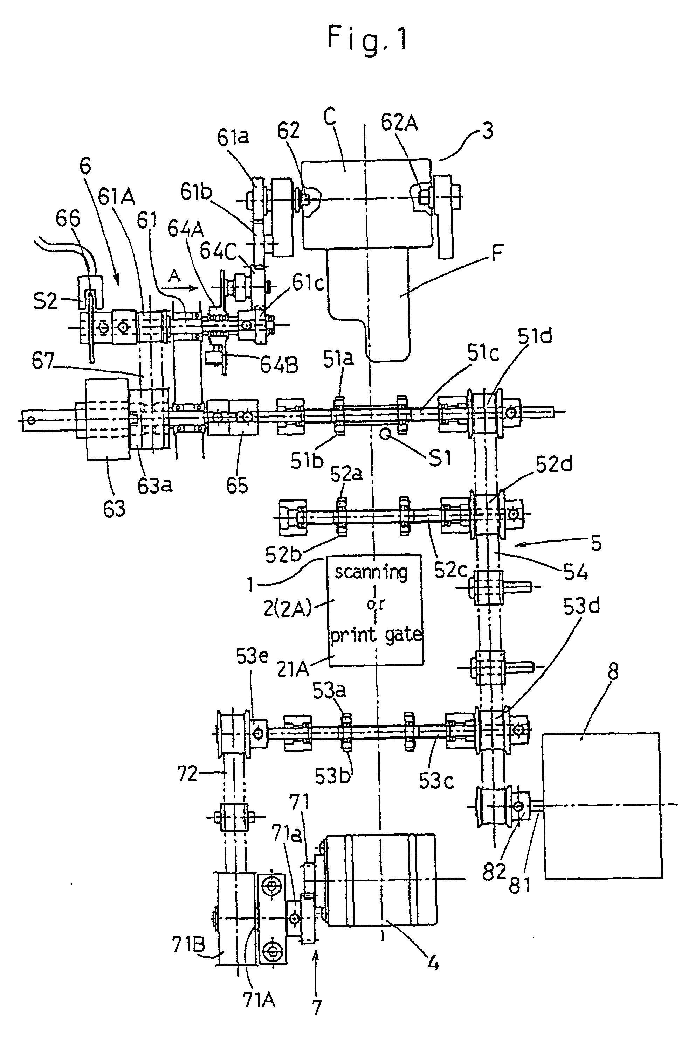

Figs. 1 to 5 illustrate a first embodiment of a film transfer apparatus according to the present invention.

Fig. 1 is a plan view of the film transfer apparatus.

The film transfer apparatus includes, as shown, a process station 2 provided across a film transfer path 1 for subjecting the film F to a process, and a cartridge set station 3 and a pulley 4 (a rewinder) disposed on both ends of the film transfer path 1 for feeding, taking up, and holding the film F which has been processed at the processing station 2.

There is a film transfer mechanism 5 provided along the film transfer path 1. The film transfer mechanism 5 comprises three, first, second, and third, pairs of transfer roller assemblies 51, 52, and 53 which consist mainly of drive rollers 51a, 52a, 53a and pinch rollers 51b, 52b, 53b respectively.

The first, second, and third drive rollers 51a, 52a, and 53a are mounted on drive shafts 51c, 52c, and 53c respectively which also hold three pulleys 51d, 52d, and 53d. The pulleys 51d, 52d, and 53d are linked by a drive belt 54 to a drive pulley of a drive motor 8 which will be described later.

Denoted by S1 is a loading sensor which comprises a detector element and a photosensitive element and is mounted between the first and second transfer roller assemblies 51 and 52.

A spool rotating mechanism 6 is provided for rotating the spool (not shown) of a cartridge C loaded on the cartridge set station 3 and comprises a drive shaft 61, two spool rotating shafts 62 and 62A, a friction 63, and a clutch 64.

The rotation of the drive shaft 61 is transmitted through a set of gears 61a, 61b and 61c, and a clutch gear 64C, described later, to the spool rotating mechanism 62.

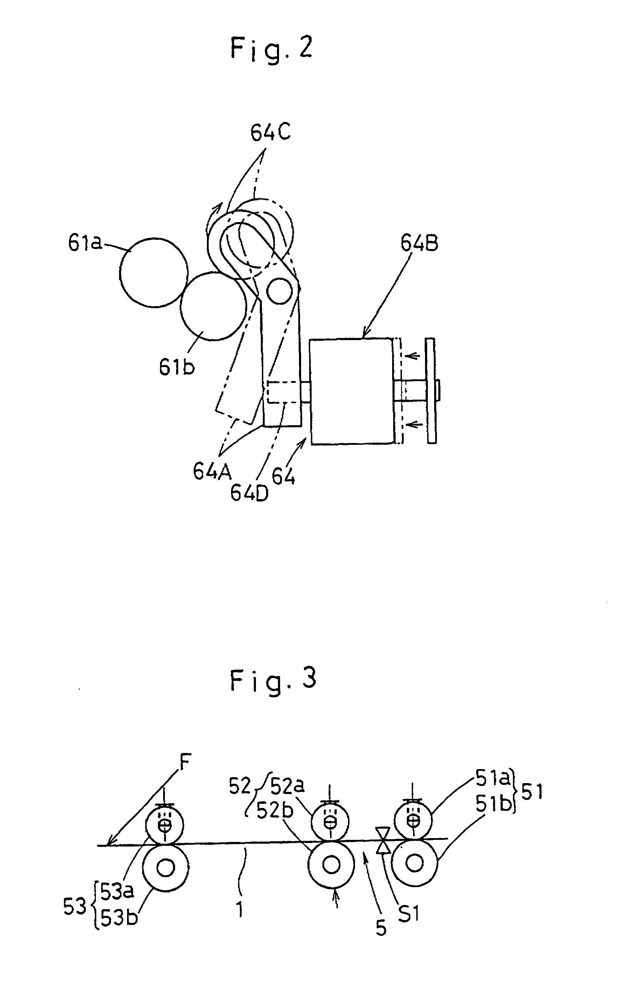

The clutch 64 controls the transmission of the rotation from the drive shaft 61 to the spool rotating shaft 62. As shown in Fig. 2, the clutch 64 comprises a clutch lever 64A, a solenoid 64B, and a clutch gear 64C. The clutch lever 64A is rotata mounted on the drive shaft 61.

When the solenoid 64B is energized, its magnetic force causes an actuator 64D to push the clutch lever 64A. This disengages the clutch gear 64C from the gears 61a and 61b. When the solenoid 64B is turned off, the clutch lever 64A returns to its original position allowing the clutch gear 64C to engage with the gears 61a and 61b.

A rotary detection disk 66 has a notch or aperture (not shown) provided in the outer edge thereof and is mounted on the drive shaft 61.

Denoted by S2 is a rotation sensor which has a detector element and a photosensitive element for counting the number of rotations of the rotary detection disk 66 through detecting the passing of the notch or aperture.

During the returning of the film F into the cartridge C, the sensor S2 starts counting the number of rotations upon the leading end of the film F departing from the first transfer roller assembly 51 of the film transfer mechanism 5. When the number of rotations counted reaches a predetermined value, the solenoid 64B releases the clutch lever 64A to prevent over-running of the film F.

The axle of the friction 63 is linked by a coupling 65 to the drive shaft 51c of the first drive roller assembly 51a of the film transfer mechanism 5. The friction 63 is also coupled to the drive shaft 61 by a drive belt 67 mounted between two pulleys 61A and 63a of the friction 63 and drive shaft 61 respectively.

The friction 63 of the spool rotating mechanism 6 may be a combination of an outer body and a drive shaft which are closely joined to each other by a frictional material.

The friction 63 absorbs a difference between the feeding of the film F by the drive roller assemblies of the film transfer mechanism 5 and the rewinding of the film F by the spool rotating shaft 62. In action, the friction 63 allows slipping of the outer body on its rotating drive shaft to prevent the film F from being overloaded with more than a critical value.

The friction 63 is not limited to the prescribed construction and will be arranged in any other appropriate form which can eliminate the difference of movement. In the embodiment, the friction 63 is in the form of a torque limiter.

Also, a take-up rotating mechanism 7 is provided for rotating the take-up pulley 4. The take-up rotating mechanism 7 comprises a friction 71 mounted on a shaft of the take-up pulley 4 and a take-up gear 71a.

The take-up gear 71a is mounted on a drive shaft 71A to which a pulley 71B is also secured. A drive belt 72 is mounted between the pulley 71B and a pulley 53e mounted on the drive shaft 53c of the third drive roller assembly 53a.

The friction 71 of the take-up rotating mechanism 7 may be a rotary unit comprising an outer body and a drive shaft. The outer body is closely joined by a frictional material to the drive shaft.

The friction 71 absorbs a difference between the feeding of the film F by the drive roller assemblies of the film transfer mechanism 5 and the taking up of the film F by the take-up pulley 4. More specifically, the friction 71 allows slipping of the outer body on its rotating drive shaft to prevent the film F from being overloaded with more than a critical value.

The friction 71 is not limited to the prescribed construction and will be arranged in any other appropriate form which can eliminate the difference of movement. In the embodiment, the friction 71 is in the form of an oil damper.

The drive motor 8 is provided for forwarding the film F one frame at a time and reversing it in continuous motion. The drive motor 8 has a drive shaft 81 on which the drive pulley 82 is mounted.

The process station 2 comprises an exposure stage 2A and a scanning stage. At the exposure stage 2A, a frame of the film F paused in a print gate 21A is projected by light source on to a sheet of printing paper (not shown).

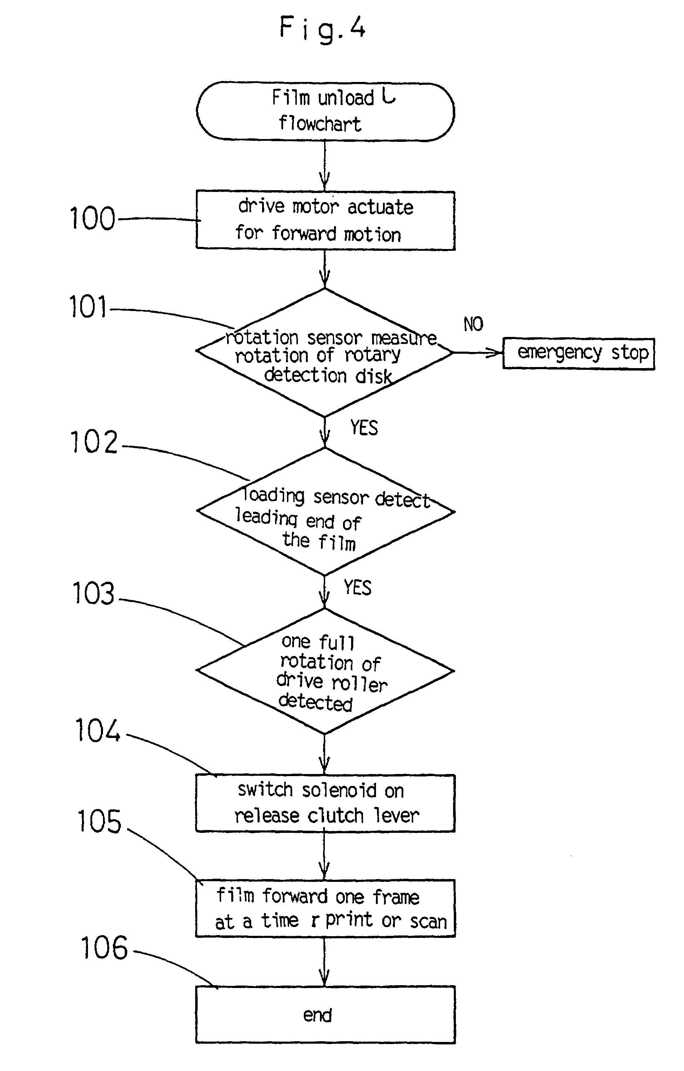

A series of actions of the film F from unloading from the cartridge C to taking up on the take-up pulley across the process station 2 will now be explained referring to a flowchart of Fig. 4.

(1) After the solenoid 64B for the clutch 64 is switched off, the drive motor 8 is actuated for forward motion. Accordingly, the film F is unloaded from the spool in the cartridge C by the action of the spool rotating shafts 62 and 62A (Step 100).

Meanwhile, the number of rotations of the rotary detection disk 66 is measured by the rotation sensor S2 (Step 101).

(2) The leading end of the film F is passed through the first transfer roller assembly 51 and measured by the loading sensor S1 (Step 102).

(3) After one full rotation of the first drive roller 51b is detected, the solenoid 64B for the clutch 64 is switched on to stop the rotation of the spool rotating shaft 62 (Steps 103 and 104).

At the time, the leading end of the film F is nipped in the first transfer roller assembly 51.

(4) The film F is further drawn out from the cartridge C and forwarded one frame at a time along the transfer path 1 by the action of the transfer roller assemblies 51, 52, and 53. As its frames have been subjected one at a time to a desired process at the process station 2, the film F is taken up by the take-up pulley 4 for temporal storage (Step 105).

Meanwhile, the difference of movement between the feeding distance by the film transfer mechanism 5 and the rewound length on the take-up pulley 4 during the taking up action of the taken-up pulley 4 is offset by the action of the oil damper 71 of the take-up rotating mechanism 7.

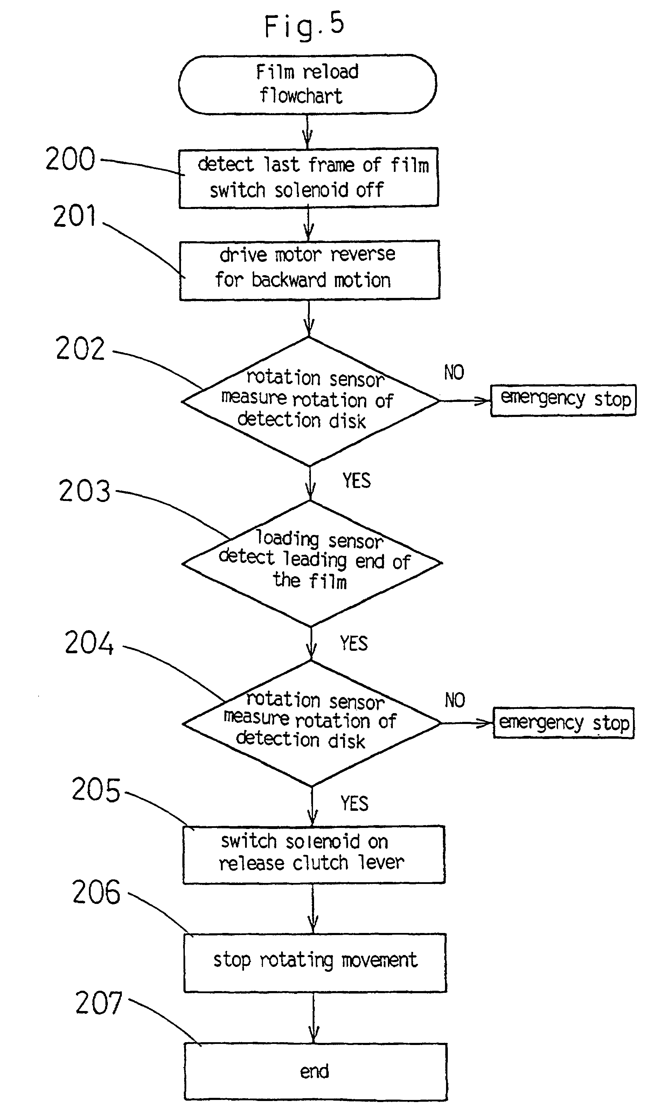

Then, the reloading of the film F from the take-up pulley 4 to the cartridge C will be explained referring to a flowchart of Fig. 5.

(1) After the solenoid 64B for the clutch 64 is switched off, the drive shaft 61 of the spool rotating mechanism 6 is joined to the spool rotating shaft 62 (Step 200).

(2) The drive motor 8 is actuated to drive reverse motions of the take-up pulley 4, the transfer roller assemblies 51 to 53 of the transfer mechanism 5, and the spool rotating shaft 62 so that the film F is returned back from the take-up pulley 4 (step 201).

Simultaneously, the rotation sensor S2 starts counting the number of rotations of the rotary detection disk 66 (Step 202).

Meanwhile, the difference of movement between the unwinding distance by the take-up pulley 4 and the rewinding length by the film transfer mechanism 5 during the reversing is offset by the action of the oil damper 71.

(3) Upon the loading sensor S1 detecting the leading end of the film F which has departed from the first transfer roller assembly 51, the rotation sensor S2 starts counting the rotation of the rotary detection disk 66. When the rotation sensor S2 counts up to the predetermined number, it switches on the solenoid 64B for the clutch 64 to stop the rotating movement of the spool rotating shaft 62 (Steps 203 to 207). These steps prevent the film F from being overwound.

According to the embodiment, the film F can smoothly be unwound and rewound on the cartridge C or the take-up pulley 4 without being jammed or injured.

### Embodiment 2

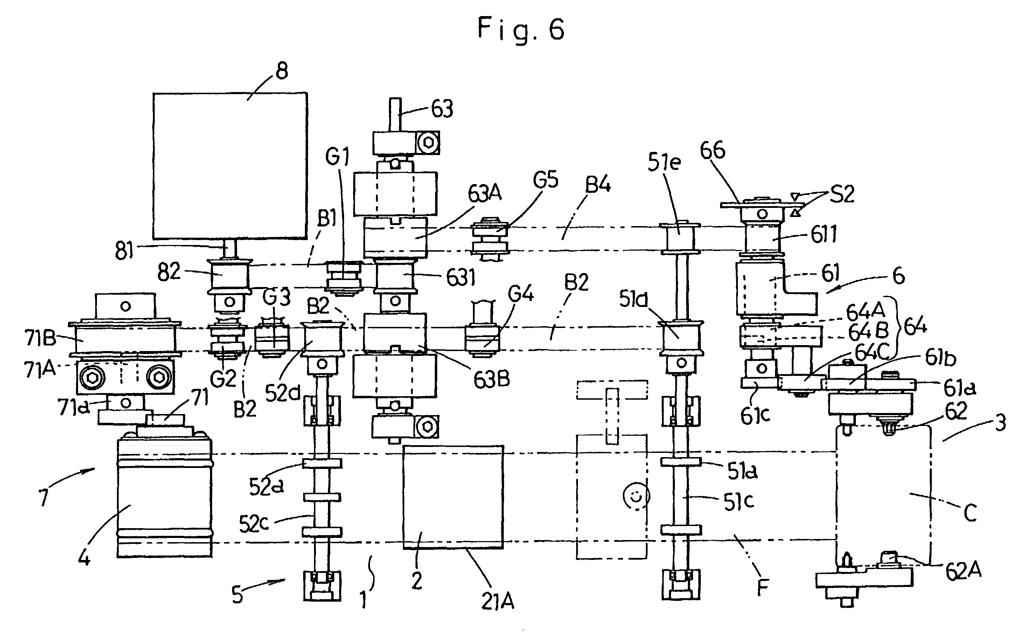

Figs. 6 to 10 illustrate a second embodiment of the film transfer apparatus according to the present invention.

Fig. 6 is a plan view of the film transfer apparatus.

The film transfer apparatus of the second embodiment, as shown, comprises a process station 2 provided across a film path 1 for subjecting the film F to a desired process, and a cartridge set station 3 and a take-up pulley 4 (a rewinder) for rewinding the film F processed at the process station 2.

The process station 2 comprises an exposure stage and a scanning stage. At the exposure stage, the film F is exposed through a print gate 21A to an intensity of exposure light for printing a frame picture on a sheet of printing paper (not shown).

The scanning stage includes a magnetic head (not shown) for reading and writing data on magnetic recording tracks of the film F.

Denoted by 8 is a drive motor (a film transfer motor) for advancing the film F one frame at a time in its forward rotation mode and reversing it continuously in its backward rotation mode. The drive motor 8 has a drive shaft 81 on which a drive pulley 82 is mounted.

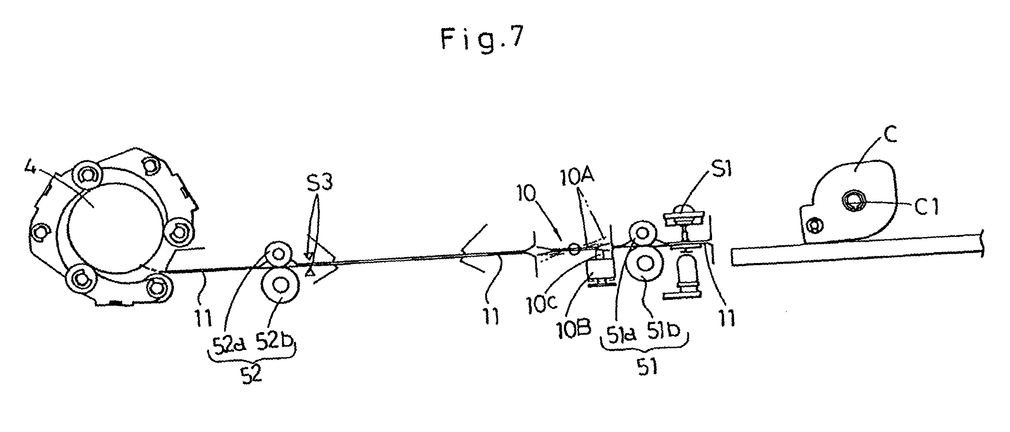

A film transfer mechanism 5 is provided along the transfer path 1 and comprises two, first and second, transfer roller assemblies 51 and 52. The transfer roller assemblies 51 and 52 include drive rollers 51a and 52a, and press roller 51b and 52b respectively (Figs. 6 and 7).

The first drive roller 51a is mounted on a drive shaft 51c to which two pulleys 51d and 51e are fitted.

Similarly, the second drive roller 52a is mounted on a drive shaft 52c to which a pulley 52d is fitted.

There is a take-up rotating mechanism 7 provided for rotating a take-up pulley 4. The take-up rotating mechanism 7 comprises a friction 71 mounted on a pulley shaft of the take-up pulley 4, and a take-up drive gear 71a. The take-up drive gear 71 is mounted on a drive shaft 71A to which a pulley 71B is fitted.

A friction shaft 63 is provided on which frictions 63A and 63B and a pulley 631 are mounted.

Referring to Fig. 6, a drive belt B1 is mounted between the pulley 631 and the drive pulley 82 of the drive motor 8. Also, shown is a guide pulley G1.

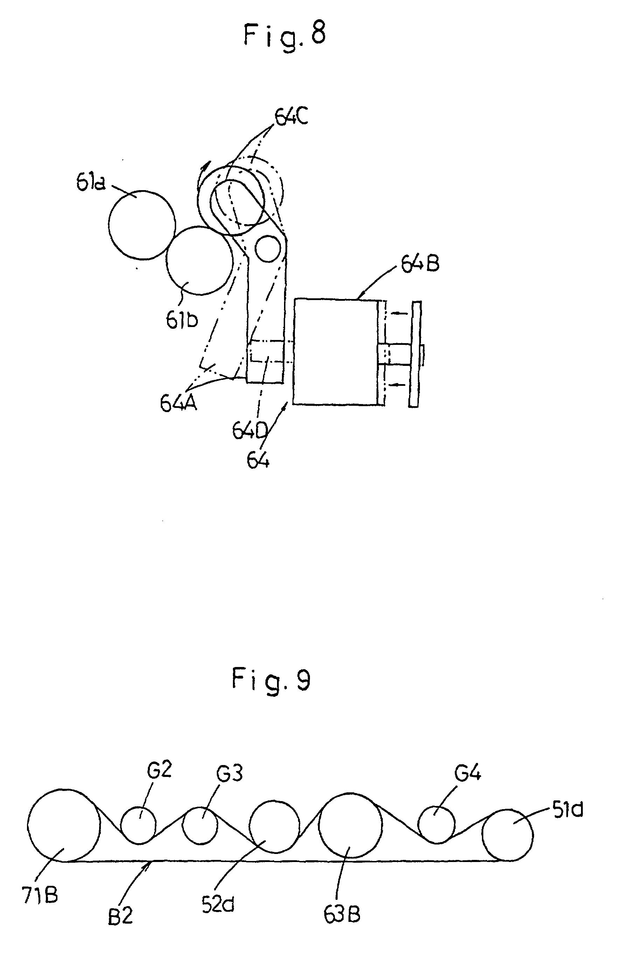

As illustrated in Figs. 6 and 9, a drive belt B2 is mounted to run along the friction 63B, the pulley 71B of the take-up rotating mechanism 7, the pulley 51d of the first drive shaft 51c, and the pulley 52d of the second drive shaft 52c in the film transfer mechanism 5. There are further provided guide pulleys G2, G3, and G4.

The rotation of the drive motor 8 is transmitted through the friction 63B to first and second drive shafts 51c, 52c for driving both the transfer roller assemblies 51 and 52.

Denoted by S1 is a loading sensor comprising a combination of a detector element and a photosensitive element for detecting the leading end of the film F. The loading sensor S1 is mounted between the cartridge set station 3 and the first transfer roller assembly 51.

There is provided a trailing-end detection sensor S3 (a loading sensor) which comprises a combination of a detector element and a photosensitive element for detecting the trailing end of the film F. The sensor S3 is mounted between the first transfer roller assembly 51 and the second transfer roller assembly 52, but close to the later.

Also, a spool rotating mechanism 6 is provided for rotating a spool C2 in a cartridge C loaded to the cartridge set station 3. The spool rotating mechanism 6 comprises a drive shaft 61, spool rotating shafts 62 and 62A, and a clutch 64.

The rotation of the drive shaft 61 is transmitted through a set of gears 61a, 61b, and 61c, and a clutch gear 64C described later to the spool rotating shaft 62.

The clutch 64 controls the transmission of the rotation from the drive shaft 61 to the spool rotating shaft 62. As shown in Fig. 8, the clutch 64 comprises a clutch lever 64A, a solenoid 64B, and a clutch gear 64C. The clutch lever 64A is rotatably mounted on the drive shaft 61.

When the solenoid 64B is energized, its magnetic force causes an actuator 64D to push the clutch lever 64A. This disengages the clutch gear 64C from the gears 61a and 61b. When the solenoid 64B is turned off, the clutch lever 64A returns to its original position allowing the clutch gear 64C to engage with the gears 61a and 61b.

A rotary detection disk 66 is mounted on the drive shaft 61 and has an aperture or notch (not shown) provided in the outer edge thereof.

The passing of the aperture or notch of the rotary detection disk 66 is detected by a rotation sensor S2 for counting the number of rotations. The rotation sensor S2 comprises a combination of a detector element and a photosensitive element.

During the returning of the film F to the cartridge C, the rotation sensor S2 starts counting the number of rotations of the rotary detection disk 66 upon the leading end of the film F departing from the first transfer roller assembly 51 of the film transfer mechanism 5. When the number of rotations reaches a predetermined value, the solenoid 64B releases a clutch lever 64A to prevent overrunning of the film F.

When the trailing end of the film F has departed from the spool C1 of the cartridge C, the rotary detection disk 66 remains rotating with the final frame of the film F being processed. The departure of the film F is detected by the rotation sensor S2 which in turn produces and sends a trailing-end departure signal to a driver circuit for continuous motion of the drive motor 8. Upon the film F being rewound up on the take-up pulley 4, its trailing end is detected by the trailing-end detection sensor S3 which thus stops the advancing movement of the film F.

The drive shaft 61 of the rotary detection disk 66 has a pulley 611 mounted thereon. A drive belt B4 is mounted to run along the pulley 611, the friction 63A of the friction drive shaft 63, and the pulley 51e of the first drive shaft 51c in the film transfer mechanism 5. Also, shown is a guide pulley G5.

The rotation of the drive motor 8 is transmitted through the friction 63A to the first drive shaft 51c and simultaneously, through the friction 63A and clutch 64 to the spool rotating shaft 61.

If the trailing end of the film F is secured to the spool C1, the frictions 63A and 63B allow the drive pulley 82 of the drive motor 8 to run idle without transmitting its rotation to the transfer roller assemblies 51 and 52 after the last frame of the film F is subjected to the process.

As the rotation of the drive motor 8 is not transmitted to the drive shaft 66 on which the rotary detection disk 66 is mounted, the rotary detection disk 66 stops its movement.

The rotation sensor S2 thus detects the stop action of the rotary detection disk 66 and switches on the solenoid 64B for the clutch 64 to connect the drive shaft 61 in the spool rotating mechanism 6 with the spool rotating shaft 62.

Each of the frictions 63A and 63B on the friction shaft 63 may be a rotary unit comprising a drive shaft and an outer body. The outer body is closely joined to the drive shaft by a frictional material.

When the trailing end of the film F is secured but not separated from the spool C1, the friction 63B causes the drive pulley 82 of the drive motor 8 to rotate idle thus preventing the film F from being overloaded with an excessive force due to the continuous forwarding action of the transfer roller assemblies 51 and 52 with the final frame having been subjected to the process. More specifically, the outer body of the friction 63B is slipped on the drive shaft 63 for preventing overloading on the film F.

The frictions 63A and 63B are not limited to the above construction, e.g. a torque limiter, and any other means for eliminating the difference in movement will be applicable.

The friction 71, namely an oil damper, of the take-up rotating mechanism 7 eliminates the difference of movement between the forwarding distance of the film by the drive rollers of the film transfer mechanism 5 and the rewinding length on the take-up pulley 4. More particularly, the outer body of the friction 71 is slipped on its drive shaft for preventing the film F from being overloaded with an excessive force.

The friction 71 may has a construction identical to that of the first embodiment.

There is further mounted a movable film guide 10 for guiding the film F along the transfer path 1 and easing removal of the film F from the transfer path 1.

The movable film guide 10 comprises a guide body 10A and a solenoid 10B. The guide body 10A is pivoted in a see-saw form as shown by the two-dot chain line in Fig. 7. When the solenoid 10B is switched on, its actuator 10C drives the guide body 1 to the location denoted by the two-dot chain line for removal of the film F. When the solenoid 10B is switched off, its actuator 10C pulls the guide body 10A to the location denoted by the real line for allowing the film F to be advanced along the transfer path 1.

Denoted by 11 is a stationary film guide.

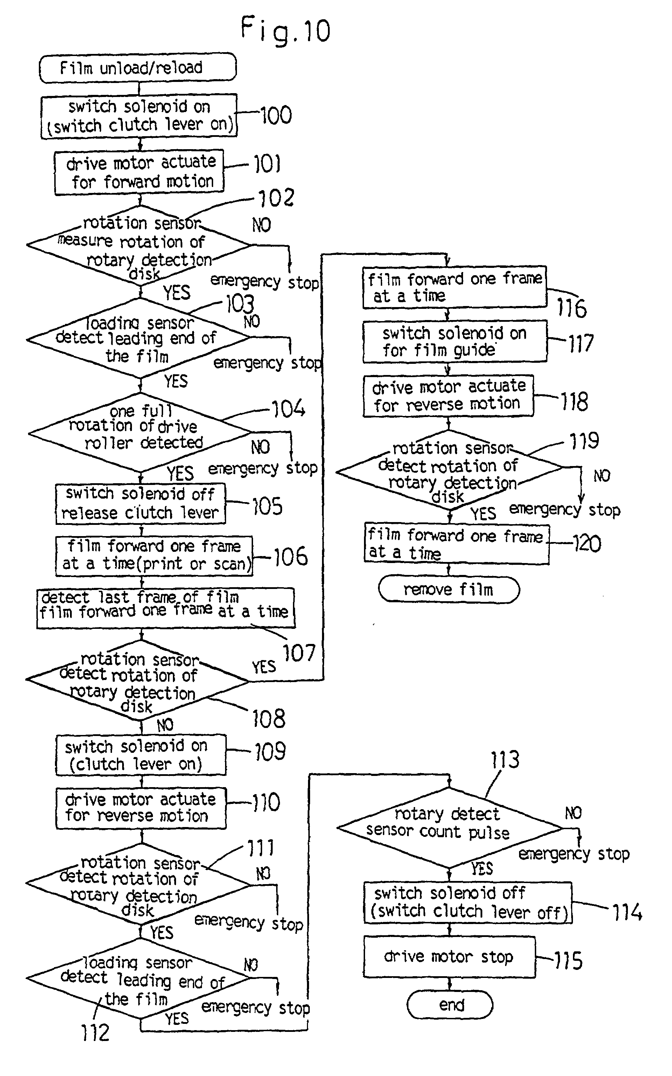

The advancing action of the film F will be explained referring to a flowchart of Fig. 10.

(1) The solenoid 64B for the clutch 64 is switched on to start the forward rotation of the drive motor 8. The film F is then unwound and released from the spool C1 of the cartridge C by the action of the spool rotating shafts 62 and 62A while the rotation sensor S2 measures the number of rotations of the rotary detection disk 66 (Steps 100 to 102).

(2) Upon the leading end of the film F coming to the first transfer roller assembly 51, its arrival is detected by the loading sensor S1 (Step 103).

(3) In response to a detection signal from the loading sensor S1, the number of rotations of the first drive roller 51b is counted. As the first drive roller 51b has rotated one full turn, the solenoid 64B for the clutch 64 is switched off to stop the motion of the spool rotating shaft 62 (Steps 104 and 105).

At the time, the leading end of the film F stays nipped in the first transfer roller assembly 51.

(4) The transfer roller assemblies 51 and 52 draw the film F from the cartridge C and forward it one frame at a time along the transfer path 1. After its frames are subjected to a process at the process station 2, the film F is wound up on the take-up pulley 4 for storage (Steps 106 and 107).

(5) If the trailing end of the film F is secured to the spool C1 of the cartridge C and its removal is not detected by the rotation sensor S2, the solenoid 64B for the clutch 64 is switched on to join the drive shaft 61 to the spool drive shaft 62 in the spool rotating mechanism 6 (Steps 108 and 109).

The case in which the trailing end of the film F is separated from the spool C1 will be explained later (with Steps 116 to 120).

(6) Then, the drive motor 8 is reversed to produce backward motions of the take-up pulley 4, the transfer roller assemblies 51 and 52, and the spool rotating shaft 62. Accordingly, the film F is unwound from the take-up pulley 4 for continuous returning movement and the rotation sensor S2 measures the rotation of the rotary ' detection disk 66 (Steps 110 and 111).

(7) Upon the leading end of the film F departing from the first transfer roller assembly 51 and being detected by the loading sensor S1, the rotation sensor S2 starts counting the number of rotations of the rotary detection disk 66. When the number is counted up to a predetermined number, the solenoid 64B for the clutch 64 is switched off to stop the spool rotating shaft 62 (Steps 112 to 115).

(8) When the trailing end of the film F is separated from the spool C1 of the cartridge C, its advancing movement is detected by the rotation sensor S2 and continued until it is detected by the tailing-end sensor S3 (Step 116).

(9) When the trailing-end sensor S3 detects the arrival of the trailing end of the film F, it switches on the solenoid 10B for film discharging action of the movable film guide 11 (Step 117).

(10) Upon the trailing-end sensor S3 detecting the trailing end of the film F, the drive motor 8 is reversed to carry the film F backward (Step 117).

(11) When the rotation sensor S2 counts up a specific number of rotations of the rotary detection disk 66 and the trailing-end sensor S3 detects the leading end of the film F, the motor drive allows the film guide 10 to remove the film F (Steps 119 and 120).

## Claims

1. A film transfer apparatus having a cartridge set station (3) provided at one end of a film transfer path (1) and a film process station (2) provided at an intermediate location of the film transfer path (1) for drawing a film (F) from a cartridge loaded to the cartridge set station (3), advancing it by the action of a film transfer means (5) to the film process station (2) where it is scanned or exposed for printing, and returning it to the cartridge,
**characterised by** a detecting means for detecting removal of the trailing end of the film from the spool in the cartridge (C), a film drawing means responsive to a detection signal of the detecting means for drawing out from the cartridge the film which has been removed from its spool, and a film discharging means for unloading from the film transfer path the film which has been drawn from the cartridge, and in that the film transfer means has a film transfer mechanism (5) linked to a drive motor (8), the detecting means comprises a rotary detection disk (66) and a rotation sensor (S2), the rotary detection disk arranged to stop its rotating motion when the trailing end of the film of which the final frame has been subjected to a desired process is still secured to the spool and to keep rotating due to a driving force of the film transfer mechanism (5) when the trailing end is separated from the spool, and the rotation sensor arranged to detect the continuous rotation of the rotary detection disk (66) after the final frame has been subjected to the process.

2. A film transfer apparatus according to claim 1, further having an idling means (64A, 64B) for canceling the driving force of the film transfer mechanism (5) to prevent exertion of an excessive load on to the film when the trailing end of the film is still secured to the spool.

## Patentansprüche

1. Filmtransportvorrichtung, die eine Patroneneinsetzstation (3), die an einem Ende einer Filmtransportbahn (1) bereitgestellt wird, und eine Filmbearbeitungsstation (2) hat, die an einer Zwischenposition der Filmtransportbahn (1) bereitgestellt wird, um einen Film (F) von einer Patrone abzuziehen, die in die Patroneneinsetzstation (3) eingesetzt worden ist, um diesen durch die Wirkung von Filmtransportmitteln (5) zur Filmbearbeitungsstation (2) vorzurücken, wo er zum Drucken abgetastet oder belichtet wird, und um diesen zurück zur Patrone zu führen,
**gekennzeichnet durch** Feststellungsmittel, um das Trennen des hinteren Endes des Films von der Spule in der Patrone (C) festzustellen, Filmabziehmittel, die auf ein Feststellungssignal von den Feststellungsmitteln ansprechen, um den Film, der von seiner Spule getrennt worden ist, aus der Patrone herauszuziehen, und Filmabgabemittel, um den Film, der aus der Patrone herausgezogen worden ist, aus der Filmtransportbahn abzugeben, und **dadurch**, daß die Filmtransportmittel einen Filmtransportmechanismus (5) haben, der mit einem Antriebsmotor (8) verbunden ist, die Feststellungsmittel eine rotierende Feststellungsscheibe (66) und einen Rotationssensor (S2) aufweisen, die rotierende Feststellungsscheibe so angeordnet ist, daß sie ihre Rotationsbewegung stoppt, wenn das hintere Ende des Films, dessen letztes Einzelbild einem gewünschten Prozeß unterzogen worden ist, noch an der Spule befestigt ist, und daß sie auf Grund einer Antriebskraft des Filmtransportmechanismus' (5) weiter rotiert, wenn das hintere Ende von der Spule getrennt ist, und der Rotationssensor so angeordnet ist, daß er die kontinuierliche Rotation der rotierenden Feststellungsscheibe (66) feststellt, nachdem das letzte Einzelbild dem Prozeß unterzogen worden ist.

2. Filmtransportvorrichtung nach Anspruch 1, die außerdem Leerlaufmittel (64A, 64B) zur Annullierung der Antriebskraft des Filmtransportmechanismus' (5) hat, um zu verhindern, daß eine übermäßige Belastung auf den Film ausgeübt wird, wenn das hintere Ende des Films noch an der Spule befestigt ist.

## Revendications

1. Dispositif de transfert de film comportant une station de réglage de la cartouche (3) agencée au niveau d'une extrémité d'une trajectoire de transfert du film (1) et une station de traitement du film (2) agencée au niveau d'un emplacement intermédiaire de la trajectoire de transfert du film (1) pour extraire le film (F) d'une cartouche chargée dans la station de réglage de la cartouche (3), le faire avancer par l'intermédiaire d'un moyen de transfert du film (5) vers la station de traitement du film (2) où il est balayé ou exposé en vue de l'impression, et le ramener vers la cartouche,
**caractérisé par** un moyen de détection destiné à détecter l'enlèvement de l'extrémité arrière du film de la bobine dans la cartouche (C), un moyen d'extraction du film sensible à un signal de détection du moyen de détection pour extraire de la cartouche le film ayant été enlevé de sa bobine, et un moyen de déchargement du film pour décharger de la trajectoire de transfert du film un film ayant été extrait de la cartouche, et en ce que le moyen de transfert du film comporte un mécanisme de transfert du film (5) relié à un moteur d'entraînement (8), le moyen de détection comprenant un disque de détection rotatif (66) et un capteur de rotation (S2), le disque de détection rotatif étant destiné à arrêter sa rotation lorsque l'extrémité arrière du film dont la dernière image a été soumise à un traitement voulu est toujours fixée sur la bobine et à poursuivre la rotation par l'intermédiaire d'une force d'entraînement du mécanisme de transfert du film (5) lorsque l'extrémité arrière est séparée de la bobine, le capteur de rotation étant destiné à détecter la rotation continue du disque de détection rotatif (66) après l'exposition de la dernière image au traitement.

2. Dispositif de transfert de film selon la revendication 1, comportant en outre un moyen de marche à vide (64A, 64B) pour supprimer la force d'entraînement du mécanisme de transfert du film (5), pour empêcher l'application d'une charge excessive au film lorsque l'extrémité arrière du film est toujours fixée à la bobine.
